# EUROPÄISCHE PATENTSCHRIFT

(11) **EP 1 274 175 B1**
(45) Veröffentlichungstag und Bekanntmachung des Hinweises auf die Patenterteilung: **30.03.2011**
(21) Anmeldenummer: 02015062.9
(22) Anmeldetag: 05.07.2002
(51) Int. Cl.: H04B 1/10, H04B 1/16

(54) **Verfahren zum Prüfen des Empfangs auf alternativen Empfangsfrequenzen bei einem Autorundfunkempfänger sowie Autorundfunkempfänger**
Method of checking the reception of alternative reception frequencies in a car radio and car radio
Procédé de la vérification la reception des fréquences alternatives de reception dans une autoradio et autoradio

(30) Priorität: 06.07.2001 DE 10132322
(43) Veröffentlichungstag der Anmeldung: 08.01.2003
(73) Patentinhaber: Harman Becker Automotive Systems GmbH, 76307 Karlsbad (DE)
(72) Erfinder: Gierl, Stefan, Dipl.-Ing., 76133 Karlsruhe (DE); Benz, Christoph, Dipl.-Ing., 77797 Ohlsbach (DE); Körner, Andreas, Dipl.-Ing., 76137 Karlsruhe (DE)
(74) Vertreter: Patentanwälte Westphal, Mussgnug & Partner

(56) Entgegenhaltungen:
- EP-A- 0 574 709
- EP-A- 0 661 822
- EP-A- 0 801 476
- US-A- 5 349 699
- US-A- 5 864 799

## Beschreibung

Verfahren zum Prüfen des Empfangs auf alternativen Empfangsfrequenzen bei einem Autobestrundfunkempfänger sowie Autobestrundfunkempfänger

Die Erfindung betrifft ein Verfahren zum Prüfen des Empfangs auf alternativen Empfangsfrequenzen bei einem Autobestrundfunkempfänger mit einem Tuner, der zur Prüfung des Empfangs auf alternativen Frequenzen kurzzeitig auf die alternativen Frequenzen abgestimmt wird.

Die Erfindung betrifft weiter einen Autobestrundfunkempfänger mit einem Tuner, der zur Prüfung des Empfangs auf alternativen Empfangsfrequenzen auf die alternativen Empfangsfrequenzen kurzzeitig abstimmbar ist.

In einem sog. Autobestrundfunkempfänger, der nur mit einem Tuner ausgerüstet ist, wird der Tuner in unregelmäßigen zeitlichen Abständen für eine kurze Zeitspanne, die in der Regel zwischen 10 und 20 ms liegt, auf eine alternative Empfangsfrequenz abgestimmt, um den Empfang auf dieser alternativen Empfangsfrequenz zu prüfen. Ist die Empfangsqualität auf einer der geprüften alternativen Empfangsfreuqenzen besser als auf der zuvor eingestellten Empfangsfrequenz, so wird auf die beste Empfangsfrequenz gewechselt. Der Rundfunkhörer hört daher das von ihm ausgesuchte Programm stets mit der augenblicklich bestmöglichen Empfangsqualität. Ein Autobestrundfunkempfänger ist daher besonders gut für den Einbau in ein Kraftfahrzeug geeignet, weil sich in Folge der Topologie des gerade befahrenen Geländes die Empfangsverhältnisse ständig ändern und weil ein Kraftfahrzeug während einer Fahrt mehrere Sendegebiete durchfahren oder berühren kann. Für den Benutzer des Autorundfunkempfängers ist es daher ein großer Vorteil, wenn sein Autobestrundfunkempfänger automatisch stets auf die beste Empfangsfrequenz abgestimmt wird. Das lästige und die Aufmerksamkeit vom Verkehr ablenkende Suchen einer neuen besseren Empfangsfrequenz durch den Benutzer entfällt daher.

Neben diesen erwähnten schätzenswerten Vorteilen ist ein Autobestrundfunkempfänger aber auch mit einem Nachteil behaftet. Während der Prüfung des Empfangs auf einer alternativen Empfangsfrequenz, die, wie bereits erläutert, etwa 10 bis 20 ms dauert, wird der Ausgang des Autobestrundfunkempfängers stumm geschaltet, was als Unterbrechung der Tonwiedergabe wahrgenommen und als störend empfunden wird. Insbesondere wenn guter bis sehr guter Empfang vorherrscht, werden die Unterbrechungen der Wiedergabe besonders deutlich wahrgenommen. Um die Prüfungen der Empfangsqualität auf alternativen Empfangsfrequenzen möglichst unhörbar zu gestalten, werden sie z. B. während Modulationspausen im Audiosignal durchgeführt, was eine deutliche Verbesserung bewirkt. Trotzdem sind die Zeitintervalle, während denen der Empfang auf alternativen Empfangsfrequenzen geprüft wird, immer noch hörbar.

Die US-Patentschrift US 5,349,699 betrifft einen Rundfunkempfänger mit einer Einrichtung zum vorübergehenden Umschalten von einer empfangenen Frequenz auf eine andere Frequenz, wobei in die während des vorübergehenden Umschaltens unterbrochenen Audiosignale Ersatzsignale eingesetzt werden, die aus den Audiosignalen vor und nach der vorübergehenden Umschaltung gebildet werden.

Es ist daher Aufgabe der Erfindung, ein Verfahren zum Prüfen des Empfangs auf alternativen Empfangsfrequenzen bei einem Autobestrundfunkempfänger sowie einen Autobestrundfunkempfänger so zu gestalten, daß die Prüfung möglichst unhörbar und kaum wahrnehmbar durchgeführt wird.

Verfahrensmäßig wird diese Aufgabe mit den im Anspruch 1 angegebenen Merkmalen dadurch gelöst, daß ein Rauchsignal wiedergegeben wird, während der Tuner auf eine alternative Empfangsfrequenz abgestimmt ist.

Schaltungsmäßig wird diese Aufgabe mit den im Anspruch 19 angegebenen Merkmalen dadurch gelöst, daß ein Rauchsignal wiedergebbar ist, während der Tuner auf eine alternative Empfangsfrequenz abgestimmt ist.

Die Erfindung sieht vor, anstatt den Autobestrundfunkempfänger während der Prüfungen des Empfangs auf alternativen Empfangsfrequenzen stumm zu schalten, ein Rauchsignal wiederzugeben. Die Erfindung geht dabei von der Erkenntnis aus, daß ein in eine Lücke des Wiedergabesignals eingefügtes geeignetes Ersatzsignal weniger stark wahrgenommen und als störend empfunden wird als eine Lücke, wie sie beim Stummschalten auftritt. Durch die erfindungsgemäße Maßgabe, anstatt den Autobestrundfunkempfänger stumm zu schalten, ein Rauchsignal wiederzugeben, werden die Zeitintervalle zur Prüfung des Empfangs auf alternativen Empfangsfrequenzen kaum mehr wahrgenommen.

Ein Ausführungsbeispiel der Erfindung sieht vor, das Rauschsignal mittels eines Tiefpasses zu filtern. Vorzugsweise liegt die 3-dB-Grenze des Tiefpasses zwischen 50 und 200 Hz.

Ein weiteres Ausführungsbeispiel der Erfindung sieht vor, daß die mittlere Leistung des Rauschsignals, das z. B. von einem Rauschgenerator erzeugt wird, etwa der mittleren Leistung des zuvor empfangenen Empfangssignals entspricht.

Vorzugsweise wird der Tuner des Autobestrundfunkempfängers während Modulationspausen im Audiosignal auf die alternativen Empfangsfrequenzen abgestimmt.

Zur Detektion einer Modulationspause wird eine erste Kurzzeitleistung des Audiosignals des Autobestrundfunkempfängers bezogen auf eine erste Mittelungsdauer ermittelt und mit einem Pausenschwellwert verglichen. Wenn die auf diese Weise ermittelte erste Kurzzeitleistung den vorgebbaren Pausenschwellwert unterschreitet, wird angenommen, daß eine Modulationspause vorliegt. Der Tuner des Autobestrundfunkempfängers wird bei Vorliegen dieses Kriteriums auf eine alternative Empfangsfrequenz abgestimmt. Der Pausenschwellwert kann fest vorgegeben sein oder z. B. in Abhängigkeit von der Empfangsfeldstärke eingestellt werden. Je größer die Empfangsfeldstärke ist, desto geringer wird der Pausenschwellwert eingestellt.

Ein weiteres Ausführungsbespiel der Erfindung sieht vor, daß neben der ersten Kurzzeitleistung eine zweite Kurzzeitleistung des Audiosignals bezogen auf eine zweite Mittelungsdauer ermittelt wird. Die zweite Mittelungsdauer ist größer gewählt als die erste Mittelungsdauer. Mittels eines Spitzenwertdetektors wird der Spitzenwert der zweiten Kurzzeitleistung gemessen. Der Zeitkonstante des Spitzenwertdetektors entsprechend nimmt der jeweils zuletzt festgestellte Spitzenwert ab, sofern am Eingang des Spitzenwertdetektors kein größerer Wert anliegt. Der Tuner des Autobestrundfunkempfängers wird nun erst dann auf eine alternative Empfangsfrequenz abgestimmt, wenn der vom Spitzenwertdetektor detektierte Spitzenwert um einen vorgebbaren Faktor C größer als die erste ermittelte Kurzzeitleistung ist. Bei richtiger Wahl und Dimensionierung der Zeitkonstanten zur Bestimmung der ersten und der zweiten Kurzzeitleistung sowie des Faktors C ist sicher gestellt, daß der Wechsel auf eine alternative Empfangsfrequenz durch Ausnutzung eines Nachverdeckungseffektes unhörbar sein wird.

Die Mittelungsdauer zur Ermittlung der ersten Kurzzeitleistung liegt im Bereich von etwa 5 ms, während die zur Ermittlung der zweiten Kurzzeitleistung etwa im Bereich von 20 ms liegt. Für die Zeitkonstante des Spitzenwertdetektors haben sich Werte um etwa 100 ms als günstig erwiesen.

Um zu häufige Abstimmungen des Tuners auf alternative Empfangsfrequenzen zu verhindern, sieht ein Ausführungsbeispiel der Erfindung vor, den Faktor C zu vergrößern, wenn die Anzahl der Umschaltvorgänge des Tuners je Zeiteinheit, z. B. eine Umschaltung je Sekunde, einen vorgebbaren Schwellwert überschreitet.

Um aber andererseits genügend Prüfungen des Empfangs auf alternativen Frequenzen zu gewährleisten, wird der Faktor C verringert, wenn der zeitliche Abstand zwischen zwei aufeinanderfolgenden Umschaltvorgängen des Tuners eine vorgebbare Höchstdauer von z. B. 30 Sekunden überschreitet.

Im Betrieb eines erfindungsgemäßen Autobestrundfunkempfängers haben sich für den Faktor C Werte zwischen 2 und 10 als günstig erwiesen.

Ein weiteres Ausführungsbeispiel nicht Teil der Erfindung sieht als Ersatzsignal einen Ausschnitt des vor dem Umschalten des Tuners auf eine alternative Empfangsfrequenz empfangenen Empfangssignals vor.

Vorzugsweise wird das Empfangssignal durch einen Zwischenspeicher geschoben, so daß stets ein Ausschnitt vorgebbarer Länge des Empfangs- oder Audiosignals im Zwischenspeicher gespeichert ist.

Ein weiteres Ausführungsbeispiel sieht vor, die Kurzzeitleistung des Empfangssignals zu ermitteln und zu analysieren. Wird ein plötzlicher Anstieg der Kurzzeitleistung des Empfangssignals detektiert, so wird der im Zwischenspeicher gespeicherte Ausschnitt des Empfangssignals unverändert wiedergegeben, während der Tuner auf eine alternative Empfangsfrequenz abgestimmt ist. Es wird ein sog. Vorverdeckungseffekt ausgenutzt, um das Umschalten des Tuners auf eine alternative Empfangsfrequenz und das Zurückschalten auf die ursprüngliche Empfangsfrequenz möglichst unhörbar zu gestalten.

Wird dagegen ein plötzlicher Abfall der Kurzzeitleistung des Empfangssignals detektiert, so wird der im Zwischenspeicher gespeicherte Ausschnitt des Empfangssignals vor der Wiedergabe noch mit einer zeitlich abklingenden Dämpfungsfunktion multipliziert. Die Dämpfung ist erforderlich, weil bei einem plötzlichen Leistungsabfall des Empfangssignals der im Zwischenspeicher gespeicherte Ausschnitt energiereicher ist als bei einem plötzlichen Anstieg der Kurzzeitleistung. In diesem Fall wird ein sog. Nachverdeckungseffekt ausgenutzt, um das Umschalten des Tuners auf eine alternative Empfangsfrequenz und zurück zu ursprünglichen Empfangsfrequenz möglichst unhörbar zu gestalten.

Das Empfangssignal kann z. B. vor dem Speichern im Zwischenspeicher komprimiert und nach dem Auslesen aus dem Speicher vor der Wiedergabe wieder dekomprimiert werden. Zur Komprimierung und Dekomprimierung können z. B. ein ADPCM-Coder und -Decoder eingesetzt werden.

Eine weitere Möglichkeit zur Datenreduktion und somit zur Minimierung des benötigten Speicherplatzes besteht darin, die Abtastrate des Empfangssignals vor dem Speichern im Zwischenspeicher zu reduzieren. Am Ausgang des Zwischenspeichers wird die ursprüngliche Abtastrate mit Hilfe eines Interpolationsfilters oder durch Wiederholen von Abtastwerten mittels Abtast- und Haltegliedern wiedergewonnen. Vorzugsweise werden diese beiden Verfahren - Datenkompression und Datendekompression sowie Reduzierung der Abtastrate - miteinander kombiniert, um einen möglichst geringen Speicherbedarf zu erzielen.

Um Knackgeräusche beim Umschalten des Tuners auf eine andere Empfangsfrequenz zu vermeiden, sieht ein Ausführungsbeispiel der Erfindung vor, die Wiedergabe des Ersatzsignales - also des Rauschsignales oder des Ausschnitts des Empfangssignals - mit einer Überblendfunktion einzuleiten und zu beenden.

Die Erfindung wird anhand der Figuren näher beschrieben und erläutert.

In der Zeichnung zeigen:
- Figur 1: ein Ausführungsbeispiel der Erfindung und
- Figur 2: ein zweites Ausführungsbeispiel nicht Teil der Erfindung.

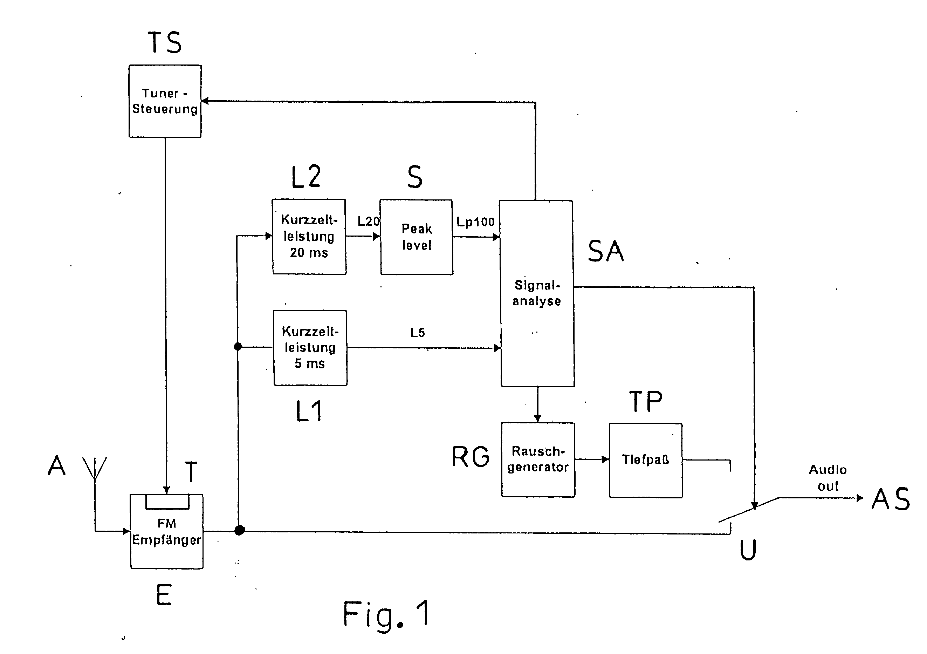

In der Figur 1 ist ein Ausführungsbeispiel gezeigt, bei welchem ein Rauschsignal als Ersatzsignal vorgesehen ist.

An den Antenneneingang eines Autobestrundfunkempfängers E ist eine Antenne A angeschlossen. Der Audioausgang des Autobestrundfunkempfängers E ist mit dem ersten Eingang eines steuerbaren Umschalters U, dem Eingang eines ersten Leistungsmeßgerätes L1 und eines zweiten Leistungsmeßgerätes L2 verbunden. Der Ausgang des ersten Leistungsmeßgerätes L1 ist mit dem ersten Eingang eines Signalanalysators SA verbunden, dessen zweiter Eingang mit dem Ausgang eines Spitzenwertdetektors S verbunden ist. Der Ausgang des zweiten Leistungsmeßgerätes L2 ist mit dem Eingang des Spitzenwertdetektors S verbunden. Der erste Steuerausgang des Signalanalysators SA ist mit dem Eingang einer Tunersteuereinheit TS verbunden, deren Steuerausgang mit dem Tuner T des Autobestrundfunkempfängers E verbunden ist. Der zweite Steuerausgang des Signalanalysators SA ist mit dem Steuereingang eines Rauschgenerators RG verbunden, dessen Ausgang mit dem Eingang eines Tiefpasses T verbunden ist, an dessen Ausgang der zweite Eingang des steuerbaren Umschalters U angeschlossen ist.

Schließlich ist der dritte Steuerausgang des Signalanalysators SA mit dem Steuereingang des steuerbaren Umschalters U verbunden, an dessen Ausgang das Audiosignal AS abnehmbar ist.

Der Autobestrundfunkempfänger E empfängt über seine Antenne A das Programm eines Rundfunksenders, auf dessen Sendefrequenz der Tuner T des Autobestrundfunkempfängers E abgestimmt ist. Das erste Leistungsmeßgerät L1 mißt über eine Mittelungsdauer von etwa 5 ms die Kurzzeitleistung des vom Autobestrundfunkempfänger E erzeugten Audiosignales. Das zweite Leistungsmeßgerät L2 mißt über eine Mittelungsdauer von etwa 20 ms die Kurzzeitleistung des Audiosignales, deren Spitzenwert im Spitzenwertdetektor S detektiert wird. Im Signalanalysator SA wird die vom ersten Leistungsmeßgerät L1 gemessene Kurzzeitleistung mit einem Pausenschwellwert verglichen, der entweder fest vorgegeben ist oder in Abhängigkeit von der Empfangsfeldstärke eingestellt wird. Je größer die Empfangsfeldstärke ist, desto kleiner wird der Pausenschwellwert eingestellt. Weiter wird im Signalanalysator SA geprüft, ob die vom Spitzenwertdetektor gemessene Spitzenleistung um einen vorgebbaren Faktor C größer ist als die vom ersten Leistungsmeßgerät ermittelte Kurzzeitleistung.

Wenn der Signalanalysator SA feststellt, daß die vom ersten Leistungsmeßgerät gemessene Kurzzeitleistung des Audiosignales den vorgegebenen Pausenschwellwert unterschreitet, wird eine Modulationspause im Audiosignal angenommen. Der Signalanalysator SA gibt daher an seinem ersten Steuerausgang ein Steuersignal an die Tunersteuereinheit TS, ein zweites Steuersignal an seinem zweiten Steuerausgang an den Rauschgenerator RG und ein drittes Steuersignal an seinem dritten Steuerausgang an den Steuereingang des steuerbaren Umschalters U ab. Die Tunersteuereinheit TS stimmt nun den Tuner T auf eine alternative Empfangsfrequenz ab. Der Rauschgenerator RG erzeugt ein Rauschsignal, das vom Tiefpaß T tiefpassgefiltert am zweiten Eingang des steuerbaren Umschalters U anliegt. Weil das dritte Steuersignal am dritten Steuerausgang des Signalanalysators den steuerbaren Umschalter U umschaltet, ist das tiefpaßgefilterte Rauschsignal am Ausgang des steuerbaren Umschalters U abnehmbar und wird daher vom Autobestrundfunkempfänger E wiedergegeben. Nach der etwa 10 bis 20 ms dauernden Prüfung der Empfangsqualität auf der eingestellten alternativen Empfangsfrequenz werden der Tuner T auf die vor der Prüfung eingestellte Empfangsfrequenz zurückgestellt und der steuerbare Umschalter U wieder umgeschaltet, so daß wieder das Audiosignal AS des Autobestrundfunkempfängers E am Ausgang des steuerbaren Umschalters U liegt, wenn die Empfangsqualität auf der alternativen Empfangsfrequenz unter der Empfangsqualität der zuvor eingestellten Empfangsfrequenz liegt. Ergibt dagegen die Prüfung der Empfangsqualität, daß der Empfang auf der alternativen Empfangsfrequenz besser ist als auf der vor der Prüfung eingestellten Empfangsfrequenz, so bleibt der Tuner T auf der alternativen Empfangsfrequenz abgestimmt. Gleichzeitig erzeugt der Signalanalysator SA ein Steuersignal an seinem dritten Steuerausgang, das den steuerbaren Umschalter U umschaltet, so daß am Ausgang des steuerbaren Umschalters U nicht mehr das tiefpaßgefilterte Rauschsignal sondern das Audiosignal AS des Autobestrundfunkempfängers abnehmbar ist.

Wenn der Signalanalysator feststellt, daß die vom Spitzenwertdetektor S ermittelte Spitzenleistung um den vorgebbaren Faktor C größer ist als die vom ersten Leistungsmeßgerät L1 gemessene Kurzzeitleistung des Audiosignals, nimmt der Signalanalysator SA an, daß im Audiosignal ein Signalabschnitt vorliegt, in welchem Verdeckungseffekte möglich sind. Der Signalanalysator SA leitet daher in der bereits beschriebenen Weise durch Abgabe von Steuersignalen an seinen drei Steuerausgängen die Prüfung der Empfangsqualität auf einer alternativen Empfangsfrequenz ein. Hierzu stimmt die Tunersteuereinheit TS den Tuner T auf die alternative Empfangsfrequenz ab, gleichzeitig erzeugt der Rauschgenerator RG ein Rauschsignal und gleichzeitig wird der Ausgang des steuerbaren Umschalters U mit dem Ausgang des Tiefpasses T verbunden, so daß anstelle des Audiosignales nunmehr ein tiefpassgefiltertes Rauschsignal wiedergegeben wird. Nach Prüfung der Empfangsqualität - wie bereits erwähnt nach etwa 10 bis 20 ms - wird der steuerbare Umschalter U wieder umgeschaltet, so daß der Ausgang des Autobestrundfunkempfängers E mit dem Ausgang des steuerbaren Umschalters U verbunden ist. Je nachdem wie die Prüfung der Empfangsqualität auf der alternativen Empfangsfrequenz ausgefallen ist, wird der Tuner T entweder wieder zurück auf die vor der Prüfung eingestellte Empfangsfrequenz abgestimmt oder er bleibt auf die alternative Empfangsfrequenz abgestimmt.

Um ein zu häufiges die Wiedergabe störendes Prüfen der Empfangsqualität auf alternativen Empfangsfrequenzen zu verhindern, zählt der Signalanalysator SA die während einer vorgebbaren Zeitspanne durchgeführten Frequenzabstimmungen des Tuners T. Übersteigt die Anzahl der Umschaltungen auf alternative Empfangsfrequenzen eine vorgebbare Höchstzahl, so wird der Faktor C erhöht. Wird andererseits zu selten auf eine alternative Empfangsfrequenz umgeschaltet, oder mit anderen Worten ausgedrückt, wenn der zeitliche Abstand zwischen zwei aufeinanderfolgenden Prüfungen der Empfangsqualität auf einer alternativen Empfangsfrequenz eine Höchstdauer überschreitet, so wird der Faktor C kleiner gewählt, damit Prüfungen der Empfangsqualität in angemessenen Zeitabständen durchgeführt werden.

Die mittlere Leistung und somit auch die Amplitude des während einer Prüfung der Empfangsqualität auf einer alternativen Empfangsfrequenz wiedergegebenen Rauschsignales werden vom Signalanalysator SA und vom Rauschgenerator RG so bemessen, daß sie etwa der mittleren Leistung des vor der Prüfung wiedergegebenen Audiosignals entspricht, damit möglichst kein Unterschied zwischen dem Audiosignal und dem Rauschsignal hörbar ist.

Versuche haben gezeigt, daß sich bei einer 3-dB-Grenzfrequenz des Tiefpasses T von etwa 50 bis 200 Hz ausgezeichnete Ergebnisse erzielen lassen.

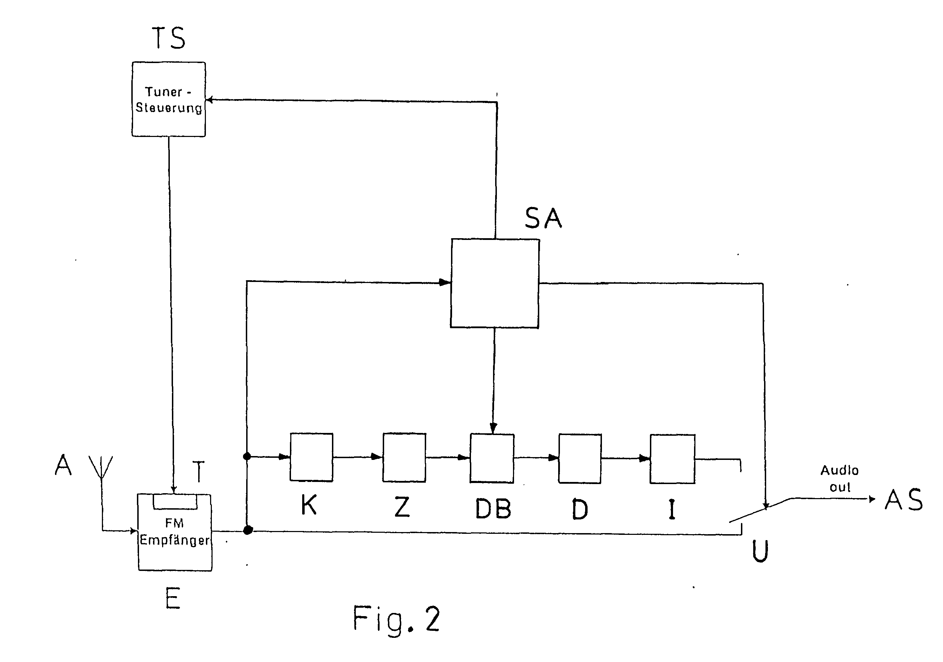

In der Figur 2 ist ein zweites Ausführungsbeispiel nicht Teil der Erfindung dargestellt.

An den Antenneneingang eines Autobestrundfunkempfängers E ist eine Antenne A angeschlossen. Der Audioausgang des Autobestrundfunkempfängers E ist mit dem Eingang eines Signalanalysators SA verbunden, dessen erster Ausgang mit dem Eingang einer Tunersteuereinheit TS verbunden ist, deren Steuerausgang mit dem Tuner T des Autobestrundfunkempfängers E verbunden ist. Der Audioausgang des Autobestrundfunkempfängers E ist außerdem über einen ersten Signalpfad unmittelbar mit dem ersten Eingang eines steuerbaren Umschalters U verbunden und über einen zweiten Signalzweig, in welchem ein Zwischenspeicher Z vorgesehen ist, mit dem zweiten Eingang des steuerbaren Umschalters U verbunden, an dessen Ausgang das Audiosignal AS abnehmbar ist. Der zweite Steuerausgang des Signalanalysators SA ist mit dem Steuereingang des steuerbaren Umschalters U verbunden.

Bei einer ersten Ausgestaltung des in Figur 2 gezeigten Ausführungsbeispieles liegt im zweiten Signalpfad nur der Zwischenspeicher Z, in welchem ein Ausschnitt vorgebbarer Länge des Audiosignales am Ausgang des Autobestrundfunkempfängers E fortlaufend gespeichert wird. Wenn der Signalanalysator SA den Tuner T des Autobestrundfunkempfängers E auf eine alternative Empfangsfrequenz umschaltet, schaltet er gleichzeitig den steuerbaren Umschalter U um, so daß an dessen Ausgang der im Zwischenspeicher Z gespeicherte Abschnitt des Audiosignales zur Wiedergabe abnehmbar ist. Nach Prüfung des Empfangs auf der alternativen Empfangsfrequenz wird der Tuner vom Signalanalysator SA wieder auf die ursprüngliche Empfangsfrequenz umgeschaltet, falls die alternative Empfangsfrequenz keinen besseren Empfang bietet. Andernfalls bleibt der Tuner auf die alternative Empfangsfrequenz abgestimmt. Gleichzeitig wird der steuerbare Umschalter U umgeschaltet. Eine weitere Ausgestaltung des in Figur 2 gezeigten Ausführungsbeispieles sieht eine Dämpfungseinheit DB zwischen dem Zwischenspeicher Z und dem steuerbaren Umschalter U vor. Der dritte Steuerausgang des Signalanalysators SA ist mit dem Steuereingang der Dämpfungseinheit DB verbunden.

Der Signalanalysator analysiert die Kurzzeitleistung des Audiosignals am Ausgang des Autobestrundfunkempfängers E. Detektiert der Signalanalysator SA einen plötzlichen Anstieg der Kurzzeitleistung des Audiosignals, so liegt, wie bereits erwähnt, ein sog. Vorverdeckungseffekt vor. Bei einem plötzlichen Anstieg der Kurzzeitleistung des Audiosignals ist im Zwischenspeicher Z ein Abschnitt geringerer Energie des Audiosignals gespeichert. Dieser Abschnitt kann ohne weitere Verarbeitung wiedergegeben werden, während der Tuner auf eine alternative Empfangsfrequenz abgestimmt ist.

Detektiert der Signalanalysator SA dagegen einen plötzlichen Abfall der Kurzzeitleistung des Audiosignals, so liegt, wie bereits erwähnt, ein sog. Nachverdeckungseffekt vor. Im Zwischenspeicher Z ist in diesem Fall ein Abschnitt mit hoher Energie gespeichert. Um Umschaltgeräusche zu vermeiden, wird dieser Signalabschnitt vor der Wiedergabe mittels der Dämpfungseinheit DB um einen vorgebbaren Wert gedämpft.

Eine weitere Ausgestaltung des Ausführungsbeispieles aus Figur 2 sieht vor, das Audiosignal vor dem Speichern im Zwischenspeicher Z mittels einer Kompressionseinheit K zu komprimieren und vor der Wiedergabe mittels einer Dekompressionseinheit D zu dekomprimieren. Durch diese Maßnahme wird der Speicherbedarf des Zwischenspeichers Z verringert. Die Kompression und Dekompression kann z. B. mittels eines ADPCM-Codierers und -Decodierers erfolgen.

Eine weitere Maßnahme zur Datenreduktion und zur Minimierung des Speicherbedarfs im Zwischenspeicher Z liegt darin, die Abtastrate des Audiosignals vor dem Speichern zu reduzieren. Vor der Wiedergabe des im Zwischenspeicher Z gespeicherten Abschnitts des Audiosignals wird die ursprüngliche Abtastrate mit Hilfe eines Interpolationsfilters I oder durch einfaches Wiederholen von Abtastwerten mittels eines Abtast- und Haltegliedes wiedergewonnen. Besonders vorteilhaft ist es, die Kompressionseinheit K und die Dekompressionseinheit D mit dem Interpolationsfilter I oder dem Abtast- und Halteglied zu kombinieren.

Das in der Figur 2 abgebildete Ausführungsbeispiel zeigt eine bevorzugte Ausgestaltung, bei welcher im zweiten Signalpfad vor dem Zwischenspeicher Z die Kompressionseinheit K zur Komprimierung der Daten und hinter dem Speicher die Dämpfungseinheit DB, die Dekompressionseinheit D und das Integrationsfilter I vorgesehen sind. Anstelle des Integrationsfilters I kann ein Abtast- und Halteglied vorgesehen sein.

Durch die erfindungsgemäße Maßnahme, anstatt den Autobestrundfunkempfänger stumm zu schalten, während der Tuner auf eine alternative Empfangsfrequenz zur Prüfung der Empfangsqualität abgestimmt wird, ein geeignetes Rauchsignal wiederzugeben, werden Schaltgeräusche vermieden, so daß ein Hörer die Testphasen des Empfangs nicht mehr wahrnimmt.

### Bezugszeichenliste

- A: Antenne
- AS: Audiosignal
- D: Dekompressionseinheit
- DB: Dämpfungseinheit
- E: Autobestrundfunkempfänger
- I: Integrationsfilter
- K: Kompressionseinheit
- L1: Leistungsmeßgerät
- L2: Leistungsmeßgerät
- RG: Rauschgenerator
- S: Spitzenwertdetektor
- SA: Signalanalysator
- T: Tuner
- TP: Tiefpass
- TS: Tunersteuereinheit
- U: steuerbarer Umschalter
- Z: Zwischenspeicher

## Patentansprüche

1. Verfahren zum Prüfen des Empfangs auf alternativen Empfangsfrequenzen bei einem Autorundfunkempfänger (E) mit einem Tuner (T), der zur Prüfung des Empfangs auf alternativen Empfangsfrequenzen kurzzeitig auf die alternativen Frequenzen abgestimmt wird, wobei als vorgebbares Ersatzsignal ein Rauschsignal wiedergegeben wird, während der Tuner (T) auf eine alternative Empfangsfrequenz abgestimmt ist.

2. Verfahren nach Anspruch 1,
**dadurch gekennzeichnet, dass** das Rauschsignal mittels eines Tiefpasses (TP) tiefpassgefiltert wird.

3. Verfahren nach Anspruch 2,
**dadurch gekennzeichnet, dass** die 3-dB-Grenzfrequenz des Tiefpasses (TP) etwa zwischen 50 und 200 Hz liegt.

4. Verfahren nach Anspruch 1, 2 oder 3,
**dadurch gekennzeichnet, dass** die mittlere Leistung des Rauschsignals etwa der mittleren Leistung des zuvor wiedergegebenen Audiosignales (AS) entspricht.

5. Verfahren nach Anspruch 1, 2, 3, oder 4,
**dadurch gekennzeichnet, dass** der Tuner (T) während Modulationspausen im Audiosignal (AS) auf alternative Empfangsfrequenzen abgestimmt wird.

6. Verfahren nach einem der Ansprüche -1 bis 5,
**dadurch gekennzeichnet, dass** zur Detektion einer Modulationspause im Audiosignal (AS) eine erste Kurzzeitleistung des Audiosignals (AS) des Autorundfunkempfängers (E) bezogen auf eine erste Mittelungsdauer ermittelt und mit einem vorgebbaren Pausenschwellwert verglichen wird und dass eine Modulationspause detektiert wird, wenn die erste Kurzzeitleistung den Pausenschwellwert unterschreitet.

7. Verfahren nach Anspruch 6,
**dadurch gekennzeichnet, dass** der Pausenschwellwert fest vorgegeben wird.

8. Verfahren nach Anspruch 6,
**dadurch gekennzeichnet, dass** der Pausenschwellwert in Abhängigkeit von der Empfangsfeldstärke eingestellt wird.

9. Verfahren nach einem der Ansprüche 6 bis 8,
**dadurch gekennzeichnet, dass** eine zweite Kurzzeitleistung des Audiosignals (AS) des Autorundfunkempfängers (E) bezogen auf eine zweite Mittelungsdauer ermittelt wird, die größer als die erste Mittelungsdauer gewählt wird, dass der Spitzenwert der zweiten Kurzzeitleistung mittels eines Spitzenwertdetektors (S) gemessen wird, mit dessen Zeitkonstanten der jeweils zuletzt gemessene Spitzenwert abnimmt, sofern am Eingang des Spitzenwertdetektors (S) kein größerer Wert anliegt und dass der Tuner (T) auf alternative Empfangsfrequenzen abgestimmt wird, wenn der detektierte Spitzenwert um einen vorgebbaren Faktor C größer als die erste Kurzzeitleistung wird.

10. Verfahren nach Anspruch 9,
**dadurch gekennzeichnet, dass** der Faktor C in Abhängigkeit von der Anzahl und/oder dem zeitlichen Abstand der Umschaltvorgänge des Tuners (T) auf alternative Empfangsfrequenzen eingestellt wird.

11. Verfahren nach Anspruch 10,
**dadurch gekennzeichnet, dass** der Faktor C vergrößert wird, wenn die Anzahl der Umschaltvorgänge je Zeiteinheit einen vorgebbaren Höchstwert überschreitet.

12. Verfahren nach Anspruch 10 oder 11,
**dadurch gekennzeichnet, dass** der Faktor C verringert wird, wenn der zeitliche Abstand zwischen zwei aufeinanderfolgenden Umschaltvorgängen des Tuners (T) eine vorgebbare Höchstdauer überschreitet.

13. Verfahren nach einem der Ansprüche 6 bis 12,
**dadurch gekennzeichnet, dass** die erste Mittelungsdauer etwa 5 ms, die zweite Mittelungsdauer etwa 20 ms und die zeitkonstante des Spitzenwertdetektors (S) etwa 100 ms betragen.

14. Verfahren nach einem der Ansprüche 6 bis 12,
**dadurch gekennzeichnet, dass** der Faktor C etwa zwischen 2 und 10 liegt.

15. Verfahren nach einem der vorangehenden Ansprüche, **dadurch gekennzeichnet, dass** die Wiedergabe des Ersatzsignals mit einer Überblendfunktion eingeleitet und beendet wird bzw. einleitbar und beendbar ist.

16. Verfahren nach Anspruch 15,
**dadurch gekennzeichnet, dass** für die Überblendfunktion eine Cosinusfunktion vorgesehen wird bzw. ist.

17. Autorundfunkempfänger (E) mit einem Tuner (T), der zur Prüfung des Empfangs auf alternative Empfangsfrequenzen kurzzeitig abstimmbar ist, wobei als ein vorgebbares Ersatzsignal ein Rauschsignal wiedergebbar ist, während der Tuner (T) auf eine alternative Empfangsfrequenz abgestimmt ist.

18. Autorundfunkempfänger nach Anspruch 17,
**dadurch gekennzeichnet, dass** das Rauschsignal mittels eines Tiefpasses (TP) tiefpassgefiltert ist.

19. Autobestrundfunkempfänger nach Anspruch 18,
**dadurch gekennzeichnet, dass** die 3-dB-Grenzfrequenz des Tiefpasses (TP) etwa zwischen 50 und 200 Hz liegt.

20. Autorundfunkempfänger nach Anspruch 17, 18 oder 19,
**dadurch gekennzeichnet, dass** die mittlere Leistung des Rauschsignals etwa der mittleren Leistung des zuvor wiedergegebenen Audiosignales (AS) entspricht.

21. Autorundfunkempfänger nach einem der Ansprüche 17 bis 20,
**dadurch gekennzeichnet, dass** der Tuner (T) während Modulationspausen im Audiosignal (AS) auf alternative Frequenzen abstimmbar ist.

22. Autorundfunkempfänger nach Anspruch 21,
**dadurch gekennzeichnet, dass** zur Detektion einer Modulationspause im Audiosignal (AS) des Autorundfunkempfängers (E) eine erste Kurzzeitleistung des Audiosignals (AS) bezogen auf eine erste Mittelungsdauer ermittelbar und mit einem vorgebbaren Pausenschwellwert vergleichbar ist und dass eine. Modulationspause detektierbar ist, wenn die erste Kurzzeitleistung den Pausenschwellwert unterschreitet.

23. Autorundfunkempfänger nach Anspruch 22,
**dadurch gekennzeichnet, dass** der Pausenschwellwert fest vorgegeben ist.

24. Autorundfunkempfänger nach Anspruch 22,
**dadurch gekennzeichnet, dass** der Pausenschwellwert in Abhängigkeit von der Empfangsfeldstärke eingestellt ist.

25. Autorundfunkempfänger nach einem der Ansprüche 21 bis 24,
**dadurch gekennzeichnet, dass** eine zweite Kurzzeitleistung des Audiosignals (AS) des Autorundfunkempfängers (E) bezogen auf eine zweite Mittelungsdauer ermittelbar ist, die größer als die erste Mittelungsdauer gewählt ist, dass der Spitzenwert der zweiten Kurzzeitleistung mittels eines Spitzenwertdetektors (S) messbar ist, mit dessen Zeitkonstanten der jeweils zuletzt gemessene Spitzenwert abnimmt, sofern am Eingang des Spitzenwertdetektors (S) kein größerer Wert anliegt, und dass der Tuner (T) auf alternative Empfangsfrequenzen abstimmbar ist, wenn der detektierte Spitzenwert um einen vorgebbaren Faktor C größer als die erste Kurzzeitleistung ist.

26. Autorundfunkempfänger nach Anspruch 25,
**dadurch gekennzeichnet, dass** der Faktor C in Abhängigkeit von der Anzahl und/oder dem zeitlichen Abstand der Umschaltvorgänge des Tuners (T) auf eine alternative Empfangsfrequenz eingestellt ist.

27. Autorundfunkempfänger nach Anspruch 25 oder 26,
**dadurch gekennzeichnet, dass** der Faktor C vergrößerbar ist, wenn die Anzahl der Umschaltvorgänge je Zeiteinheit einen vorgebbaren Höchstwert überschreitet.

28. Autorundfunkempfänger nach Anspruch 25, 26 oder 27,
**dadurch gekennzeichnet, dass** der Faktor C verringerbar ist, wenn der zeitliche Abstand zwischen zwei aufeinanderfolgenden Umschaltvorgängen des Tuners (T) eine vorgebbare Höchstdauer überschreitet.

29. Autorundfunkempfänger nach einem der Ansprüche 17 bis 28,
**dadurch gekennzeichnet, dass** eine Antenne (A) an den Antenneneingang des Autorundfunkempfängers (E) angeschlossen ist, dass der Audioausgang des Autorundfunkempfängers (E) mit dem Eingang eines ersten Leistungsmessgerätes (L1), dessen Ausgang mit dem ersten Eingang eines Signalanalysators (SA) verbunden ist, mit dem Eingang eines zweiten Leistungsmessgerätes (L2), dessen Ausgang mit dem Eingang eines Spitzenwertdetektors (S) verbunden ist, und mit dem ersten Eingang eines steuerbaren Umschalters (U) verbunden ist, an dessen Ausgang das Audiosignal (AS) oder das Rauschsignal abnehmbar ist, dass der Ausgang des Spitzenwertdetektors (S) mit dem zweiten Eingang des Signalanalysators (SA) verbunden ist, dessen erster Steuerausgang mit dem Eingang einer Tunersteuereinheit (TS), dessen zweiter Steuerausgang mit dem Steuereingang eines Rauschsignalgenerators (RG) und dessen dritter Steuerausgang mit dem Steuereingang des steuerbaren Umschalters (U) verbunden ist, dass der Steuerausgang der Tunersteuereinheit (TS) mit dem Tuner (T) des Autorundfunkempfängers (E) verbunden ist und dass der Ausgang des Rauschgenerators (RG) mit dem zweiten Eingang des steuerbaren Umschalters (U) verbunden ist.

30. Autorundfunkempfänger nach Anspruch 29,
**dadurch gekennzeichnet, dass** der Rauschgenerator (RG) über einen Tiefpass (TP) mit dem zweiten Eingang des steuerbaren Umschalters (U) verbunden ist.

31. Autorundfunkempfänger nach einem der Ansprüche 17 bis 30,
**dadurch gekennzeichnet, dass** die erste Mittelungsdauer etwa 5 ms, die zweite Mittelungsdauer etwa 20 ms und die zeitkonstante des Spitzenwertdetektors (S) etwa 100 ms betragen.

32. Autorundfunkempfänger nach einem der Ansprüche 17 bis 30,
**dadurch gekennzeichnet, dass** der Faktor C etwa zwischen 2 und 10 liegt.

33. Autorundfunkempfänger nach einem der Ansprüche 17 bis 32,
**dadurch gekennzeichnet, dass** die Wiedergabe des Ersatzsignals mit einer Überblendfunktion eingeleitet und beendet wird bzw. einleitbar und beendbar ist.

34. Autorundfunkempfänger nach Anspruch 33,
**dadurch gekennzeichnet, dass** für die Überblendfunktion eine Cosinusfunktion vorgesehen wird bzw. ist.

## Claims

1. A method of checking reception on alternative reception frequencies in a car radio receiver (E) with a tuner (T), which is briefly tuned to alternative frequencies to check reception on the alternative frequencies, wherein a noise signal is produced as a predeterminable substitute signal whilst the tuner (T) is tuned to an alternative reception frequency.

2. A method as claimed in claim 1, **characterised in that** the noise signal is low-pass filtered by means of a low-pass filter (TP).

3. A method as claimed in claim 2, **characterised in that** the 3dB threshold frequency of the low-pass filter (TP) is between about 50 and 200Hz.

4. A method as claimed in claim 1, 2 or 3, **characterised in that** the mean power of the noise signal corresponds approximately to the mean power of the previously produced audio signal (AS).

5. A method as claimed in claim 1, 2, 3 or 4, **characterised in that** the tuner (T) is tuned to alternative reception frequencies during modulation pauses in the audio signal (AS).

6. A method as claimed in one of claims 1 to 5, **characterised in that** in order to detect a modulation pause in the audio signal (AS), a first short term power of the audio signal (AS) of the car radio receiver (E) is determined with respect to a first averaging period and is compared with a predeterminable pause threshold value and that a modulation pause is detected when the first short term power falls below the pause threshold value.

7. A method as claimed in claim 6, **characterised in that** the pause threshold value is fixed.

8. A method as claimed in claim 6, **characterised in that** the pause threshold value is adjusted in dependence on the reception field strength.

9. A method as claimed in one of claims 6 to 8, **characterised in that** a second short term power of the audio signal (AS) of the car radio receiver (E) is determined with respect to a second averaging period, which is selected to be larger than the first averaging period, that the peak value of the second short term power is measured by means of a peak value detector (S), with whose time constant the last measured peak value decreases provided that a larger value is not present on the input of the peak value detector (S) and that the tuner (T) is tuned to alternative reception frequencies when the detected peak value is larger than the first short term power by a predeterminable factor C.

10. A method as claimed in claim 9, **characterised in that** the factor C is adjusted in dependence on the number and/or the temporal spacing of the switching processes of the tuner to alternative reception frequencies.

11. A method as claimed in claim 10, **characterised in that** the factor C is increased when the number of the switching processes per unit time exceeds a predeterminable maximum value.

12. A method as claimed in claim 10 or 11, **characterised in that** the factor C is reduced when the temporal spacing of two successive switching processes of the tuner (T) falls below a predeterminable maximum duration.

13. A method as claimed in one of claims 6 to 12, **characterised in that** the first averaging period is about 5ms, the second averaging period is about 20ms and the time constant of the peak value detector (S) is about 100ms.

14. A method as claimed in one of claims 6 to 12, **characterised in that** the factor C is between about 2 and 10.

15. A method as claimed in one of the preceding claims, **characterised in that** the production of the substitute signal is initiated and terminated or is initiatable and terminable with a fading function.

16. A method as claimed in claim 15, **characterised in that** a cosine function is provided for the fading function.

17. A car radio receiver (E) with a tuner (T), which is briefly tunable to alternative reception frequencies to check the reception, wherein a noise signal is producible as a predeterminable substitute signal whilst the tuner (T) is tuned to an alternative reception frequency.

18. A car radio receiver as claimed in claim 17, **characterised in that** the noise signal is low-pass filtered by means of a low-pass filter (TP).

19. A car radio receiver as claimed in claim 18, **characterised in that** the 3 db threshold frequency of the low-pass filter (TP) is between about 50 and 200Hz.

20. A car radio receiver as claimed in claim 17, 18 or 19, **characterised in that** the mean power of the noise signal corresponds approximately to the mean power of the previously produced audio signal (AS).

21. A car radio receiver as claimed in one of claims 17 to 20, **characterised in that** the tuner (T) is tunable to alternative frequencies during modulation pauses in the audio signal (AS).

22. A car radio receiver as claimed in claim 21, **characterised in that** in order to detect a modulation pause in the audio signal (AS) of the car radio receiver (E), a first short term power of the audio signal (AS) is determinable with respect to a first averaging period and is comparable with a predeterminable pause threshold value and that a modulation pause is detectable when the first short term power falls below the pause threshold value.

23. A car radio receiver as claimed in claim 22, **characterised in that** the pause threshold value is fixed.

24. A car radio receiver as claimed in claim 22, **characterised in that** the pause threshold value is adjusted in dependence on the reception field strength.

25. A car radio receiver as claimed in one of claims 21 to 24, **characterised in that** a second short term power of the audio signal (AS) of the car radio receiver (E) is determined with respect to a second averaging period, which is selected to be larger than the first averaging period, that the peak value of the second short term power is detectable by means of a peak value detector (S), with whose time constant the last measured peak value decreases provided that a larger value is not present at the input of the peak value detector (S) and that the tuner (T) is tunable to alternative reception frequencies when the detected peak value is larger than the first short term power by a predeterminable factor C.

26. A car radio receiver as claimed in claim 25, **characterised in that** the factor C is adjusted in dependence on the number and/or the temporal spacing of the switching processes of the tuner (T) to an alternative reception frequency.

27. A car radio receiver as claimed in claim 25 or 26, **characterised in that** the factor C is increasable when the number of the switching processes per unit time exceeds a predetermined maximum value.

28. A car radio receiver as claimed in claim 25, 26 or 27, **characterised in that** the factor C is reducible when the temporal spacing of two successive switching processes of the tuner (T) exceeds a predeterminable maximum duration.

29. A car radio receiver as claimed in one of claims 17 to 28, **characterised in that** an antenna (A) is connected to the antenna input of the car radio receiver (E), that the audio output of the car radio receiver (E) is connected to the input of a first power measuring device (L1), the output of which is connected to the first input of a signal analyser (SA), to the input of a second power measuring device (L2), the output of which is connected to the input of a peak value detector (S), and to the first input of a controllable switch (U), at whose output the audio signal (AS) or the noise signal may be taken off, that the output of the peak value detector (S) is connected to the second input of the signal analyser (SA), the first control output of which is connected to the input of a tuner control unit (TS), the second control output of which is connected to the control input of a noise signal generator (RG) and the third control output of which is connected to the control input of the controllable switch (U), that the control output of the tuner control unit (TS) is connected to the tuner (T) of the car radio receiver (E) and that the output of the noise generator (RG) is connected to the second input of the controllable switch (U).

30. A car radio receiver as claimed in claim 29, **characterised in that** the noise generator (RG) is connected via a low-pass filter (TP) to the second input of the controllable switch (U).

31. A car radio receiver as claimed in one of claims 17 to 30, **characterised in that** the first averaging period is about 5ms, the second averaging period is about 20ms and the time constant of the peak value detector (S) is about 100ms.

32. A car radio receiver as claimed in one of claims 17 to 30, **characterised in that** the factor C is between about 2 and 10.

33. A car radio receiver as claimed in one of claims 17 to 32, **characterised in that** the production of the substitute signal is initiated and terminated or is initiatable and terminable with a fading function.

34. A car radio receiver as claimed in claim 33, **characterised in that** a cosine function is provided for the fading function.

## Revendications

1. Procédé de vérification de la réception des fréquences alternatives de réception dans un récepteur d'autoradio (E) comprenant un tuner (T), qui est calé sur les fréquences alternatives de réception à court terme pour la vérification de la réception des fréquences alternatives, dans lequel un signal de bruit est reproduit comme signal de remplacement pouvant être prédéterminé, alors que le tuner (T) est calé sur une fréquence alternative de réception.

2. Procédé selon la revendication 1, **caractérisé en ce que** le signal de bruit est filtré par un filtre passe-bas (TP).

3. Procédé selon la revendication 2, **caractérisé en ce que** la fréquence limite de 3-dB du filtre passe-bas (TP) se situe entre 50 et 200 Hz.

4. Procédé selon la revendication 1, 2 ou 3, **caractérisé en ce que** la puissance moyenne du signal de bruit correspond à environ la puissance moyenne du signal audio (AS) reproduit auparavant.

5. Procédé selon la revendication 1, 2, 3 ou 4, **caractérisé en ce que** le tuner (T) est calé sur les fréquences alternatives de réception pendant les pauses de modulation dans le signal audio (AS).

6. Procédé selon l'une des revendications 1 à 5, **caractérisé en ce que**, pour détecter une pause de modulation dans le signal audio (AS), une première puissance à court terme du signal audio (AS) du récepteur d'autoradio (E) est déterminée par rapport à une première durée de calcul de la moyenne et est comparée à un seuil de pause pouvant être prédéterminé et une pause de modulation est détectée quand la première puissance à court terme se situe en dessous du seuil de pause.

7. Procédé selon la revendication 6, **caractérisé en ce que** le seuil de pause est prédéterminé de manière invariable.

8. Procédé selon la revendication 6, **caractérisé en ce que** le seuil de pause est ajusté en fonction de la force du champ de réception.

9. Procédé selon l'une des revendications 6 à 8, **caractérisé en ce qu'**une deuxième puissance à court terme du signal audio (AS) du récepteur d'autoradio (E) est déterminée par rapport à une deuxième durée du calcul de la moyenne qui est sélectionnée pour être supérieure à la première durée du calcul de la moyenne, **en ce que** la valeur du pic de la deuxième puissance à court terme est mesurée au moyen d'un détecteur de pics (S), dont les constantes temporelles permettent de diminuer la valeur du pic mesurée à chaque fois en dernier, dans la mesure où, à l'entrée du détecteur de pics (S), il n'y a pas de valeur supérieure et **en ce que** le tuner (T) est calé sur des fréquences alternatives de réception, quand le pic détecté est supérieur d'un facteur C pouvant être déterminé à la première puissance à court terme.

10. Procédé selon la revendication 9, **caractérisé en ce que** le facteur C est ajusté sur des fréquences alternatives de réception en fonction du nombre et/ou de l'intervalle de temps entre les opérations de commutation du tuner (T).

11. Procédé selon la revendication 10, **caractérisé en ce que** le facteur C est augmenté quand le nombre des opérations de commutation par unité de temps dépasse une valeur maximale pouvant être déterminé au préalable.

12. Procédé selon la revendication 10 ou 11, **caractérisé en ce que** le facteur C est réduit quand l'intervalle de temps entre deux opérations de commutation successives du tuner (T) dépasse une durée maximale pouvant être déterminée au préalable.

13. Procédé selon l'une des revendications 6 à 12, **caractérisé en ce que** la première durée du calcul de la moyenne est d'environ 5 ms, la deuxième durée du calcul de la moyenne est d'environ 20 ms et la constante temporelle du détecteur de pics (S) est d'environ 100 ms.

14. Procédé selon l'une des revendications 6 à 12, **caractérisé en ce que** le facteur C se situe environ entre 2 et 10.

15. Procédé selon l'une quelconque des revendications précédentes, **caractérisé en ce que** la reproduction du signal de remplacement est engagée et achevée ou peut être engagées et peut être achevée par une fonction de mélange.

16. Procédé selon la revendication 15, **caractérisé en ce qu'**une fonction cosinus est prévue pour la fonction de mélange.

17. Récepteur d'autoradio (E) comprenant un tuner (T), qui peut être calé à court terme sur des fréquences alternatives de réception pour la vérification de la réception, où un signal de bruit peut être reproduit comme signal de remplacement pouvant être prédéterminé, alors que le tuner (T) est calé sur une fréquence alternative de réception.

18. Récepteur d'autoradio selon la revendication 17, **caractérisé en ce que** le signal de bruit est filtré par un filtre passe-bas (TP).

19. Récepteur d'autoradio selon la revendication 18, **caractérisé en ce que** la fréquence limite de 3-dB du filtre passe-bas (TP) se situe entre 50 et 200 Hz.

20. Récepteur d'autoradio selon la revendication 17, 18 ou 19, **caractérisé en ce que** la puissance moyenne du signal de bruit correspond à environ la puissance moyenne du signal audio (AS) reproduit auparavant.

21. Récepteur d'autoradio selon l'une des revendications 17 à 20, **caractérisé en ce que** le tuner (T) est calé sur les fréquences alternatives de réception pendant les pauses de modulation dans le signal audio (AS).

22. Récepteur d'autoradio selon la revendication 21, **caractérisé en ce que**, pour détecter une pause de modulation dans le signal audio (AS) du récepteur d'autoradio (E), une première puissance à court terme du signal audio (AS) pet être déterminée par rapport à une première durée de calcul de la moyenne et peut être comparée à un seuil de pause pouvant être déterminé au préalable et **en ce qu'**une pause de modulation peut être détectée quand la première puissance à court terme se situe en dessous du seuil de pause.

23. Récepteur d'autoradio selon la revendication 22, **caractérisé en ce que** le seuil de pause est prédéterminé de manière invariable.

24. Récepteur d'autoradio selon la revendication 22, **caractérisé en ce que** le seuil de pause est ajusté en fonction de la force du champ de réception.

25. Récepteur d'autoradio selon l'une des revendications 21 à 24, **caractérisé en ce qu'**une deuxième puissance à court terme du signal audio (AS) du récepteur d'autoradio (E) peut être déterminée par rapport à une deuxième durée du calcul de la moyenne qui est sélectionnée pour être supérieure à la première durée du calcul de la moyenne, **en ce que** la valeur du pic de la deuxième puissance à court terme peut être mesurée au moyen d'un détecteur de pics (S), dont les constantes temporelles permettent de diminuer la valeur du pic mesurée à chaque fois en dernier, dans la mesure où, à l'entrée du détecteur de pics (S), il n'y a pas de valeur supérieure et **en ce que** le tuner (T) peut être calé sur des fréquences alternatives de réception, quand le pic détecté est supérieur d'un facteur C pouvant être déterminé au préalable à la première puissance à court terme.

26. Récepteur d'autoradio selon la revendication 25, **caractérisé en ce que** le facteur C est ajusté sur une fréquence alternative de réception en fonction du nombre et/ou de l'intervalle de temps entre les opérations de commutation du tuner (T).

27. Récepteur d'autoradio selon la revendication 25 ou 26, **caractérisé en ce que** le facteur C peut être augmenté quand le nombre des opérations de commutation par unité de temps dépasse une valeur maximale pouvant être déterminée au préalable.

28. Récepteur d'autoradio selon la revendication 25, 26 ou 27, **caractérisé en ce que** le facteur C peut être réduit quand l'intervalle de temps entre deux opérations de commutation successives du tuner (T) dépasse une durée maximale pouvant être déterminée au préalable.

29. Récepteur d'autoradio selon l'une des revendications 17 à 28, **caractérisé en ce qu'**une antenne (A) est raccordée à l'entrée d'antenne du récepteur d'autoradio (E), **en ce que** la sortie audio du récepteur d'autoradio (E) est raccordée à l'entrée d'un premier appareil de mesure de la puissance (L1), dont la sortie est raccordée à la première entrée d'un analyseur de signaux (SA), à l'entrée d'un deuxième appareil de mesure de la puissance (L2), dont la sortie est raccordée à l'entrée d'un détecteur de pics (S), et à la première entrée d'un commutateur (U) pouvant être commandé, à la sortie duquel le signal audio (AS) ou le signal de bruit peut être reçu, **en ce que** la sortie du détecteur de pics (S) est raccordée à la deuxième entrée de l'analyseur de signaux (SA), dont la première sortie de commande est raccordée à l'entrée d'une unité de commande du tuner (TS), dont la deuxième sortie de commande est raccordée à l'entrée de commande d'un générateur de signaux de bruit (RG) et dont la troisième sortie de commande est raccordée à l'entrée de commande du commutateur (U) pouvant être commandé, **en ce que** la sortie de commande de l'unité de commande du tuner (TS) est raccordée au tuner (T) du récepteur d'autoradio (E), et **en ce que** la sortie du générateur de bruits (RG) est raccordée à la deuxième entrée du commutateur (U) pouvant être commandé.

30. Récepteur d'autoradio selon la revendication 29, **caractérisé en ce que** le générateur de bruits (RG) est raccordé à la deuxième entrée du commutateur (U) pouvant être commandé par le biais d'un filtre passe-bas (TP).

31. Récepteur d'autoradio selon l'une des revendications 17 à 30, **caractérisé en ce que** la première durée de calcul de la moyenne est d'environ 5 ms, la deuxième durée de calcul de la moyenne est d'environ 20 ms et la constante temporelle du détecteur de pics (S) est d'environ 100 ms.

32. Récepteur d'autoradio selon l'une des revendications 17 à 30, **caractérisé en ce que** le facteur C se situe environ entre 2 et 10.

33. Récepteur d'autoradio selon l'une des revendications 17 à 32, **caractérisé en ce que** la reproduction du signal de remplacement est engagée et achevée ou peut être engagée et peut être achevée par une fonction de mélange.

34. Récepteur d'autoradio selon la revendication 33, **caractérisé en ce qu'**une fonction cosinus est prévue pour la fonction de mélange.
